# EUROPEAN PATENT APPLICATION

(11) **EP 4 678 678 A1**
(43) Date of publication of application: **14.01.2026**
(21) Application number: 24766925.2
(22) Date of filing: 26.02.2024
(51) Int. Cl.: C08G 59/42, B32B 27/36, C08G 63/91, C08G 63/688, C09D 7/63, C09D 163/00, C09D 167/00, C09J 11/06, C09J 163/00, C09J 167/00

(54) **CROSSLINKED POLYESTER RESIN HAVING DISULFIDE BOND**

(30) Priority: 03.03.2023 JP 2023033020
(71) Applicant: Toyobo Co., Ltd., Kita-ku Osaka-shi, Osaka 530-0001 (JP)
(72) Inventor: UCHIYAMA, Shoko, Otsu-shi, Shiga 520-0292 (JP); HAYASHI, Mikihiro, Nagoya-shi, Aichi 466-8555 (JP)
(74) Representative: Müller-Boré & Partner Patentanwälte PartG mbB
(86) International application number: PCT/JP2024/006819
(87) International publication number: WO 2024/185554

(57) **Abstract**

An object of the present invention is to provide a crosslinked polyester resin that exhibits high self-healing properties, high molding processability while exhibiting high adhesion to resin substrates such as a PET film and a polyimide film.

A crosslinked polyester resin having a disulfide bond, obtained by crosslinking a polyester (A) having a carboxy group with an epoxy compound (B). A paint, a coating agent, and an adhesive containing the crosslinked polyester resin. An assembly including a layer containing the crosslinked polyester resin and adherend.

## Description

### TECHNICAL FIELD

The present invention relates to a crosslinked polyester resin. Specifically, the present invention relates to a paint, a coating agent, an adhesive, a pressure sensitive adhesive, and an assembly using the same. The present invention also relates to a method for peeling the crosslinked polyester resin from the assembly.

### BACKGROUND ART

Polyester generally exhibits high heat resistance and excellent chemical resistance, and is therefore particularly useful in industrial applications. A crosslinked polyester, obtained by curing a polyester having carboxyl groups on a side chain with an epoxy compound, is widely used as a thermosetting resin in fields such as adhesives and paints. However, a thermosetting resin is difficult to melt by heat or to dissolve in solvents, making recycling and repeated use challenging. As a solution to this problem, Patent Document 1 and Patent Document 2 propose adhesives using compounds in which disulfide bonds (S-S) are mixed or introduced in polymers.

### CITATION LIST

### PATENT DOCUMENTS

Patent Document 1: JP-A-2001-512762
Patent Document 2: WO 2022/080409

### SUMMARY OF THE INVENTION

### PROBLEMS TO BE SOLVED BY THE INVENTION

Patent Document 1 discloses an adhesive composition for forming an adhesive layer, wherein the adhesive layer can be dissociated using a splitting reagent. Patent Document 2 discloses an adhesive that, after being used as an adhesive, can undergo cleavage of disulfide bonds upon irradiation with light, thereby reducing the molecular weight of the cured adhesive and thus enabling the adherend to be separated from the bonded article. However, neither document describes the self-healing properties and moldability of a single-layer film.

As a result of intensive studies to solve the above problems, the present inventors have found that a crosslinked polyester resin having a specific composition exhibits excellent self-healing properties and high molding processability while having high adhesion to resin substrates, such as PET films and polyimide films. Based on these findings, the present invention has been completed.

### SOLUTION TO THE PROBLEMS

As a result of intensive studies to solve the above problems, the present inventors have found that a crosslinked polyester resin described below can achieve the above objectives, and have completed the present invention. The present invention has the following features.

[1] A crosslinked polyester resin having a disulfide bond, obtained by crosslinking a polyester (A) having a carboxy group with an epoxy compound (B).
[2] The crosslinked polyester resin according to [1],
   wherein a time required for a relaxation modulus to reach 0.37 times an initial relaxation modulus is from 5 × 10⁻¹ seconds to 5 × 10³ seconds, as measured at 150°C using a rheometer under application of a vertical stress of 0.1 N and a shear strain of 10%.
[3] The crosslinked polyester resin according to [1] or [2],
   wherein the polyester (A) has an acid value of 7 mg KOH/g or more and 120 mg KOH/g or less.
[4] The crosslinked polyester resin according to any one of [1] to [3],
   wherein the crosslinked polyester resin has disulfide bonds in an amount of from 10 mol% to 60 mol% based on 100 mol% of an amount of ester bonds.
[5] The crosslinked polyester resin according to any one of [1] to [4],
   wherein the crosslinked polyester resin contains a transesterification catalyst in an amount of from 5 parts by mole to 40 parts by mole based on 100 mol equivalents of the carboxy groups in the polyester (A).
[6] The crosslinked polyester resin according to any one of [1] to [5],
   wherein the epoxy compound (B) is an epoxy amine compound having a tertiary amino group.
[7] A paint containing the crosslinked polyester resin according to any one of [1] to [6].
[8] A coating agent containing the crosslinked polyester resin according to any one of [1] to [6].
[9] An adhesive containing the crosslinked polyester resin according to any one of [1] to [6].
[10] An assembly comprising a layer containing the crosslinked polyester resin according to any one of [1] to [6] and an adherend.
[11] A method for peeling the layer containing the crosslinked polyester resin from the assembly according to [10], comprising the step of heating the layer containing the crosslinked polyester resin at a temperature equal to or higher than a stress relaxation initiation temperature of the crosslinked polyester resin.

### EFFECTS OF THE INVENTION

Due to dynamic covalent crosslinking capable of undergoing bond exchange at high temperatures, the crosslinked polyester resin of the present invention exhibits high strength at room temperature, and softening behavior at a temperature equal to or higher than the activation temperature for ester bond exchange; therefore, the crosslinked polyester resin of the present invention enables self-healing properties and molding processability, as well as bonding between substrates. Furthermore, by introducing a disulfide bond into a polymer main chain, a resin that possesses two types of reactive sites in one polymer chain, one for an ester bond exchange and the other for a disulfide exchange reaction, can be designed. When these two types of reaction systems coexist, the activation temperature for bond exchange can be lowered, and it is expected that properties such as stress relaxation can be exhibited at a lower temperature, for example, a temperature which is 100°C or lower. Furthermore, the temperature at which bond exchange occurs, i.e., the temperature at which the crosslinked polyester resin softens, can be readily adjusted by the ratio of disulfide bonds involved in the disulfide exchange reaction and the ratio of aromatic to aliphatic components in the base polyester.

### DESCRIPTION OF EMBODIMENTS

The crosslinked polyester resin according to the embodiment of the present invention is a crosslinked polyester resin obtained by crosslinking a polyester (A) having a carboxy group with an epoxy compound (B), and has a disulfide bond.

### <Polyester (A) Having a Carboxy Group>

The polyester (A) having a carboxy group (hereinafter referred to as "polyester (A)" or merely "component (A)") is not particularly limited as long as it contains a carboxy group, and is preferably a polyester having a carboxy group on a polymer side chain. When a carboxy group is present on the polymer side chain, the polymer chain of the polyester (A) can more readily form a densely crosslinked structure with the epoxy compound (B), thereby enhancing strength at room temperature. The term "side chain" refers to either a structure in which a carboxy group is introduced into a substituent (e.g., an aliphatic hydrocarbon group, an aromatic hydrocarbon group, or an alicyclic hydrocarbon group, etc.) branched from the main chain of the polyester resin, or a structure in which a carboxy group is directly introduced into the polyester resin. The structure in which a carboxy group is directly introduced into the polyester resin is preferred.

Methods for introducing a carboxy group into the side chain of the polyester (A) include, for example, a low-temperature melt polycondensation method using a carboxy group-containing polyhydric alcohol component, and a method in which a polyester polyol is polymerized in advance and then subjected to a chain extension reaction using a polycarboxylic acid component having three or more carboxyl groups as a chain extender.

The copolymerization amount of the chain extender, when used, is preferably 0.1 parts by mass or more, more preferably 0.5 parts by mass or more, and further preferably 1 part by mass or more, based on 100 parts by mass of the polyester polyol. Also, the copolymerization amount of the chain extender, when used, is preferably 20 parts by mass or less, more preferably 15 parts by mass or less, further preferably 10 parts by mass or less, and particularly preferably 5 parts by mass or less. If the copolymerization amount is excessively high, phenomena such as difficulty in increasing the molecular weight, or whitening of the varnish caused by the progression of a reaction between chain extenders, may occur.

The chain extender is not particularly limited, and a tetracarboxylic dianhydride may be used. Examples of the tetracarboxylic dianhydride include aromatic tetracarboxylic dianhydrides, aliphatic tetracarboxylic dianhydrides, and alicyclic tetracarboxylic dianhydrides. Among these, aromatic tetracarboxylic dianhydrides are preferred.

Specific examples of the aromatic tetracarboxylic dianhydride include pyromellitic dianhydride (PMDA), oxydiphthalic dianhydride (ODPA), 3,3',4,4'-benzophenonetetracarboxylic dianhydride (BTDA), 3,3',4,4'-biphenyltetracarboxylic dianhydride (BPDA), 3,3',4,4'-diphenylsulfonetetracarboxylic dianhydride (DSDA), 4,4'-(hexafluoroisopropylidene)diphthalic anhydride (6FDA), and 2,2'-bis[(dicarboxyphenoxy)phenyl]propane dianhydride (BSAA). These aromatic tetracarboxylic dianhydrides may be used alone or in combination with two or more types. Among these, pyromellitic dianhydride is preferred from the viewpoint of solvent solubility and availability.

As the aliphatic tetracarboxylic dianhydride, for example, 1,2,3,4-butanetetracarboxylic dianhydride may be used.

Examples of the alicyclic tetracarboxylic dianhydride include 1,2,3,4-cyclobutanetetracarboxylic dianhydride, 1,2,4,5-cyclopentanetetracarboxylic dianhydride, 1,2,4,5-cyclohexanetetracarboxylic dianhydride, bicyclo[2.2.2]oct-7-ene-2,3,5,6-tetracarboxylic dianhydride, and 3,3',4,4'-bicyclohexyltetracarboxylic dianhydride. Among these, 1,2,4,5-cyclohexanetetracarboxylic dianhydride is particularly preferred. These alicyclic tetracarboxylic dianhydrides may be used alone or in combination with two or more types.

The polyester (A) has an acid value of preferably 7 mg KOH/g or more, and more preferably 10 mg KOH/g or more. Also, the acid value of the polyester (A) is preferably 120 mg KOH/g or less, more preferably 90 mg KOH/g or less, further preferably 60 mg KOH/g or less, and particularly preferably 40 mg KOH/g or less. The acid value derived from the carboxyl groups present on the side chain is preferably 5 mg KOH/g or more, and more preferably 10 mg KOH/g or more. When each acid value is equal to or higher than the above lower limit, crosslinking with the epoxy compound (B) can provide improved heat resistance. When each acid value is equal to or lower than the above upper limit, an appropriate crosslinking density can be achieved. As a result, the ester bond exchange may occur more readily due to the unrestricted molecular mobility, leading to improved adhesion through sufficient stress relaxation and softening.

Constitutional units of the polyester (A) other than those described above are not particularly limited, and a polycarboxylic acid component, a polyhydric alcohol component, and a hydroxy acid component may be used. Each of these constitutional units may be aliphatic, alicyclic, or aromatic. Among these, the polyester (A) preferably contains an aliphatic constitutional unit to improve the self-healing properties. The content of the aliphatic constitutional unit is preferably 20 mol% or more, more preferably 40 mol% or more, further preferably 60 mol% or more, and further more preferably 80 mol% or more based on the total amount of the constitutional units of the polyester (A) of 100 mol%, and the content may be 100 mol%.

Examples of the aliphatic constitutional unit include an aliphatic polycarboxylic acid component, an aliphatic polyhydric alcohol component, an aliphatic hydroxy acid component, and an aliphatic lactone component. Examples of the aliphatic polycarboxylic acid component include succinic acid, adipic acid, azelaic acid, sebacic acid, dodecanedioic acid, dimer acid, 1,2,3-propane tricarboxylic acid, and 1,3,5-pentane tricarboxylic acid. In addition, biomass derived raw materials such as itaconic acid, aspartic acid, glucaric acid, glutamic acid, and succinic acid may be used. Examples of the aliphatic polyhydric alcohol component include ethylene glycol, 1,2-propylene glycol, 1,3-propanediol, 1,4-butanediol, 2-methyl-1,3-propanediol, 2-methyl-1,3-butanediol, 1,5-pentanediol, 2,2-dimethyl-1,3-propanediol, 1,6-hexanediol, 3-methyl-1,5-pentanediol, 1,9-nonanediol, 2-ethyl-2-butylpropanediol (DMH), dimethylolheptane, and 2,2,4-trimethyl-1,3-pentanediol. In addition, biomass derived raw materials such as 3-hydroxypropionic acid, xylitol, glycerol, and sorbitol may also be used.

In the polyester (A), the molar ratio of the aromatic component to the aliphatic component may range from 0/100 to 40/70, preferably from 0/100 to 35/65, and more preferably from 0/100 to 30/70. By adjusting the ratio of the aromatic component to the aliphatic component in the polyester (A), the transesterification reaction rate and the disulfide exchange reaction rate of the crosslinked polyester resin can be controlled, and the time required for the relaxation modulus to reach 0.37 times the initial relaxation modulus can be controlled.

The polyester (A) has a number average molecular weight (Mn) of preferably 5000 or more, more preferably 10000 or more, and further preferably 12000 or more. Also, the polyester (A) has a number average molecular weight of preferably 50000 or less, more preferably 25000 or less, and further preferably 20000 or less. Adjusting the number average molecular weight within the above range makes it easier to control the acid value of the polyester (A).

The polyester (A) has a glass transition temperature of preferably -100°C or higher, more preferably -80°C or higher, and further preferably -60°C or higher. Also, the polyester (A) has a glass transition temperature of preferably 80°C or lower, more preferably 70°C or lower, and further preferably 60°C or lower. If the glass transition temperature is excessively high, the film may become brittle.

### <Epoxy compound (B)>

The epoxy compound (B) is not particularly limited, and is preferably a compound having two or more epoxy groups in a molecule. The compound having two or more epoxy groups in a molecule (epoxy crosslinking agent) is not particularly limited as long as the compound undergoes a curing reaction with the carboxy group of the polyester (A), which contains both a carboxy group and a disulfide bond, and forms crosslinks. Using the epoxy compound (B) facilitates the formation of a three-dimensional crosslinked structure in the cured coating film obtained from the crosslinked polyester resin, thereby improving the heat resistance. As the epoxy compound (B), an epoxy compound having 2 to 4 epoxy groups in a molecule is preferred, because such an epoxy compound can readily lower the stress relaxation initiation temperature and improves the self-healing properties. Examples of the epoxy compound include diepoxy compounds such as 1,4-butanediol diglycidyl ether; cresol novolac epoxy compounds; epoxy compounds having a dicyclopentadiene skeleton; and phenol novolac epoxy compounds. These may be used alone or in combination with two or more types.

The epoxy compound (B) may be an epoxy amine compound having a tertiary amino group. The use of the epoxy amine compound is preferred, as it allows the formation of a crosslinked structure with the polyester (A) upon heating at a relatively low temperature. In addition, when the crosslinking reaction is carried out in a solvent system, the use of such an epoxy amine compound may preferably suppress foaming caused by solvent evaporation. Moreover, the tertiary amino group of the epoxy amine compound having a tertiary amino group exhibits transesterification catalytic activity similar to that of the transesterification catalyst. Therefore, when the crosslinked polyester resin is heated, a hydroxyl group contained in the crosslinked polyester resin can attack the C=O bond of an ester group located near the hydroxyl group, even in the absence of a transesterification catalyst, due to the action of the tertiary amino group. As a result, bond exchange through a transesterification reaction occurs, and stress relaxation behavior can be expressed.

Examples of the epoxy amine compound having a tertiary amino group include N,N,N',N'-tetraglycidyl-m-xylene diamine, 4,4'-methylenebis(N,N-diglycidylaniline), and triglycidyl p-aminophenol. N,N,N',N'-tetraglycidyl-m-xylene diamine is marketed as a polyfunctional epoxy compound under the trade name of "TETRAD-X" by MITSUBISHI GAS CHEMICAL COMPANY, INC. Also, 4,4'-methylenebis(N,N-diglycidylaniline) is commercially available from Tokyo Chemical Industry Co., Ltd. (TCI), and triglycidyl p-aminophenol is marketed under the trade name of "jER630" by Mitsubishi Chemical Corporation. The epoxy amine compound having a tertiary amino group preferably contains a plurality of tertiary amino groups in one molecule, and, specifically, N,N,N',N'-tetraglycidyl-m-xylene diamine and 4,4'-methylenebis(N,N-diglycidylaniline) are preferred. Having a plurality of tertiary amino groups in one molecule facilitates the expression of transesterification catalytic activity, and more readily induces stress relaxation behavior. The epoxy amine compound having a tertiary amino group may be used alone or in combination with two or more types. The epoxy amine compound having a tertiary amino group may be used in combination with an epoxy compound that does not contain a tertiary amino group. The use of the epoxy amine compound having a tertiary amino group in combination with a transesterification catalyst is also preferred.

As the epoxy compound (B), an epoxy compound that does not contain a tertiary amino group may be used. Examples of such an epoxy compound include glycidyl ether type compounds such as bisphenol A diglycidyl ether, bisphenol S diglycidyl ether, and brominated bisphenol A diglycidyl ether; glycidyl ester type compounds such as hexahydrophthalic acid glycidyl ester and dimer acid glycidyl ester; and alicyclic or aliphatic epoxides such as triglycidyl isocyanurate, 3,4-epoxycyclohexylmethyl carboxylate, epoxidized polybutadiene, and epoxidized soybean oil. These may be used alone or in combination with two or more types.

From the viewpoint of the crosslinking density with the polyester (A), the epoxy compound (B) has a number average molecular weight (Mn) of preferably 100 or more and 700 or less, and more preferably 100 or more and 600 or less. When the epoxy compound (B) is an epoxy amine compound having a tertiary amino group, the lower limit of the molecular weight of the epoxy amine compound is, for example, 250 or more.

In the crosslinked polyester resin, the ratio between the amount of the polyester (A) having a carboxy group and the amount of the epoxy compound (B) can be determined based on the molar ratio of functional groups, specifically, the molar ratio between the carboxy groups of the polyester (A) having a carboxy group and the epoxy groups of the epoxy compound (B), regardless of the number of epoxy groups of the epoxy compound. From the viewpoint of the crosslinking reaction efficiency and the stress relaxation in the crosslinked polyester after crosslinking, the ratio of the carboxy groups of the polyester (A) having a carboxy group to the epoxy groups of the epoxy compound (B) (carboxy group:epoxy group) is preferably from 100:50 to 100:150 (parts by mole), and more preferably from 100:80 to 100:120 (parts by mole).

### <Crosslinked Polyester Resin>

The crosslinked polyester resin is a reaction product of the polyester (A) having a carboxy group and the epoxy compound (B) and is a crosslinked polyester resin having a disulfide bond. Having a disulfide bond in the crosslinked polyester resin can lower the bond exchange activation temperature. Methods for introducing a disulfide bond into the crosslinked polyester resin include, for example, a method in which polyester having a disulfide bond is used as the polyester (A), and a method in which an epoxy compound having a disulfide bond is used as the epoxy compound (B). The disulfide bonds are effective regardless of the source component (polycarboxylic acid components or polyhydric alcohol components of the polyester, or an epoxy compound).

Methods for introducing a disulfide bond into the polyester (A) are not particularly limited, and, for example, include a method in which a polycarboxylic acid component having a disulfide bond or a polyhydric alcohol component having a disulfide bond is used as a constitutional unit of the polyester (A). Examples of the polycarboxylic acid component having a disulfide bond include dithiodiglycolic acid, 2,2'-dithiobisbenzoic acid, 2,2'-dithiosalicylic acid, 3,3'-dithiodipropionic acid, 4,4'-dithiodibutyric acid, and 6,6'-dithiodinicotinic acid. Examples of the polyhydric alcohol component having a disulfide bond include bis(2-hydroxyethyl)disulfide, 3,3'-dihydroxydiphenyl disulfide, and 2,2'-dihydroxy-6,6'-dinaphthyldisulfide.

As the epoxy compound (B) having a disulfide bond, for example, bis(4-glycidyloxyphenyl)disulfide may be used. Methods for producing the epoxy compound (B) having a disulfide bond include, for example, a method in which a compound having both an unsaturated bond and a disulfide bond, such as diallyl disulfide, is epoxidized via an oxidation reaction of the unsaturated bond.

The amount of the disulfide bond is preferably 10 mol% or more, more preferably 15 mol% or more, further preferably 18 mol% or more, and most preferably 20 mol% or more based on 100 mol% of the amount of the ester bonds of the crosslinked polyester resin. The amount of the disulfide bond is preferably 60 mol% or less, more preferably 58 mol% or less, and further preferably 55 mol% or less. When the amount of the disulfide bond is equal to or greater than the above lower limit, the temperature at which bond exchange occurs can be readily lowered, thereby improving self-healing properties. On the other hand, when the amount of the disulfide bond is equal to or lower than the upper limit, resin coloration caused by thermal history can be suppressed.

When the crosslinked polyester resin has at least one of the following features: (1) containing the transesterification catalyst, or (2) using an epoxy amine compound having a tertiary amino group as the epoxy compound (B), the bond exchange reaction can be readily induced, which is preferable. The crosslinked polyester resin may contain both the transesterification catalyst and the epoxy amine compound. The reaction between the polyester (A) and the epoxy compound (B) may be carried out under solvent-free conditions or in the presence of an organic solvent. The organic solvent is not particularly limited as long as it does not react with the polyester (A), the epoxy compound (B), and the crosslinked polyester resin. Examples of the organic solvent include aromatic organic solvents such as toluene and xylene; aliphatic organic solvents such as heptane and octane; ketone-based solvents such as methyl ethyl ketone; ether-based solvents such as tetrahydrofuran and diethyl ether; and amide-based solvents such as dimethylformamide and N-methylpyrrolidone. These may be used alone or in combination with two or more types.

When the reaction is carried out in the presence of an organic solvent, the solvent may be removed by drying after the reaction. The drying temperature for the solvent is preferably 80°C or higher, more preferably 100°C or higher, and further preferably 120°C or higher. Also, the drying temperature for the solvent is preferably 200°C or lower, more preferably 180°C or lower, and further preferably 160°C or lower.

The reaction temperature between the polyester (A) and the epoxy compound (B) is preferably equal to or higher than room temperature, more preferably 30°C or higher, and further preferably 40°C or higher. Also, the reaction temperature is preferably 200°C or lower, more preferably 180°C or lower, and further preferably 150°C or lower.

The reaction time of the above reaction depends on the reaction temperature, and is preferably 30 minutes or longer, more preferably one hour or longer, and further preferably two hours or longer. Also, the reaction time is preferably within 10 hours, more preferably within 8 hours, and further preferably within 5 hours.

In an exemplary method for producing the crosslinked polyester resin, a mixture of the polyester (A), the epoxy compound (B), and the transesterification catalyst, if needed, is heated to induce a crosslinking reaction via an epoxy ring-opening reaction, and the crosslinked polyester resin is obtained.

In the method for producing the crosslinked polyester resin, a quaternary ammonium salt or a tertiary amine may be used as a reaction catalyst for the reaction between the polyester (A) and the epoxy compound (B), as long as the effects of the present invention are not impaired. Examples of the quaternary ammonium salt and the tertiary amine include imidazole-based compounds such as 2-methylimidazole, 1,2-dimethylimidazole, 2-ethyl-4-methylimidazole, 2-phenyl-4-methylimidazole, and 1-cyanoethyl-2-ethyl-4-methylimidazole; tertiary amines such as triethylamine, triethylenediamine, N'-methyl-N-(2-dimethylaminoethyl)piperazine, N,N-diisopropylethylamine, N,N-dimethylaminopyridine, 1,8-diazabicyclo[5.4.0])-7-undecene, 1,5-diazabicyclo[4.3.0]-5-nonene, and 6-dibutylamino-1,8-diazabicyclo[5.4.0]-7-undecene, and amine salts obtained by reacting these tertiary amines with phenol, octanoic acid, or tetraphenylborate salt; and quaternary ammonium salts such as tetramethylammonium bromide, tetraethylammonium bromide, tetra-n-butylammonium bromide, tetramethylammonium chloride, trimethylbenzylammonium chloride, triethylbenzylammonium chloride, tetramethylammonium hydroxide, trimethylbenzylammonium hydroxide, and tetra-n-butylammonium hydroxide.

The stress relaxation initiation temperature of the crosslinked polyester resin is preferably 30°C or higher, more preferably 40°C or higher, and further preferably 50°C or higher. The stress relaxation initiation temperature can be lowered by introducing a disulfide bond. Although the upper limit of the stress relaxation initiation temperature of the crosslinked polyester resin is not particularly limited, and is, for example, preferably 150°C or lower, more preferably 140°C or lower, and further preferably 135°C or lower.

For the crosslinked polyester resin, the time required for the relaxation modulus to reach 0.37 times the initial relaxation modulus is preferably from 5 × 10⁻¹ seconds to 5 × 10³ seconds, as measured at 150°C using a rheometer under application of a vertical stress of 0.1 N and a shear strain of 10%. When the time required for the relaxation modulus to reach 0.37 times the initial relaxation modulus, as measured at 150°C, is within 5 × 10³ seconds, the crosslinked polyester resin expresses appropriate stress relaxation at a temperature of 150°C or lower. As a result, problems such as warpage caused by curing shrinkage, and, when PET films, polyimide films, or layers composed of different materials are laminated via an adhesive, warpage or cracking due to the difference in coefficients of thermal expansion between layers composed of different materials can be reduced or suppressed. Also, a time of 5 × 10⁻¹ seconds or longer, required for the relaxation modulus to reach 0.37 times the initial relaxation modulus, can also readily suppress flow-out of an adhesive when the crosslinked polyester resin is used as an adhesive. The time required for the relaxation modulus to reach 1/e times, i.e., 0.37 times the initial relaxation modulus is more preferably within 4 × 10³ seconds, further preferably within 3 × 10³ seconds, and most preferably within 2 × 10³ seconds. Also, the time required for the relaxation modulus to reach 0.37 times the initial relaxation modulus is more preferably 1 × 10¹ or longer, and further preferably 1 × 10² or longer. The time required for the relaxation modulus to reach 0.37 times the initial relaxation modulus can be adjusted within the range by a method such as regulating the crosslinking density of the crosslinked polyester resin, the transesterification reaction rate, or the disulfide exchange rate, specifically, by regulating the acid value of the polyester (A) having a carboxy group and a disulfide bond, the type and the blend ratio of the epoxy compound (B), the content of the transesterification catalyst, the disulfide bond content ratio of the polyester (A), or the ratio of the aromatic component to the aliphatic component in the polyester (A).

### <Transesterification Catalyst>

The crosslinked polyester resin may contain a transesterification catalyst. The transesterification catalyst acts on ester groups in the polyester (A). By containing a transesterification catalyst, a "dynamic" covalent crosslink, which allows for bond exchange at high temperatures, is formed in the crosslinked polyester resin, enabling high strength at room temperature, and also enabling, at a temperature equal to or higher than the activation temperature for ester bond exchange, adhesion to a substrate or a film, and the expression of stress relaxation, which can suppress the generation of cracks caused by the difference in coefficients of thermal expansion between different layers.

Examples of the transesterification catalyst include zinc acetate, zinc acetylacetonate, triphenylphosphine, 1,5,7-triazabicyclo[4.4.0]dec-5-ene, 1,8-diazabicyclo[5.4.0]-7-undecene, and triphenylphosphine. Among these, zinc acetate and 1,5,7-triazabicyclo[4.4.0]dec-5-ene are preferred. In particular, the use of 1,5,7-triazabicyclo[4.4.0]dec-5-ene tends to lower the stress relaxation initiation temperature and the time required for stress relaxation more effectively.

From the viewpoint of the mechanical strength and the uniformity of the sample of the polyester (A), as well as the stress relaxation of the crosslinked polyester resin after crosslinking, the content of the transesterification catalyst in the crosslinked polyester resin is preferably from 5 parts by mole to 40 parts by mole, and more preferably from 10 parts by mole to 30 parts by mole based on 100 mol equivalents of the carboxy groups of the polyester (A).

The crosslinked polyester resin can be used, for example, as a raw material for paints, coating agents, adhesives, and assemblies (laminates).

When the crosslinked polyester resin is used for a paint, it is suitably used in the form of a solution in which the polyester resin, the epoxy resin, and the transesterification catalyst are dissolved in a solvent, although not limited thereto. After the application of the solution, the coating film is dried and subsequently crosslinked, thereby enabling the exhibition of a self-healing effect that allows healing even when the surface is damaged.

When the crosslinked polyester resin is used for a coating agent, it is suitably used in the form of a solution in which the polyester resin, the epoxy resin, and the transesterification catalyst are dissolved in a solvent, although not limited thereto. After the application of the solution, the coating film is dried and subsequently crosslinked, thereby enabling the exhibition of a protective effect on the coated material.

When the crosslinked polyester resin is used for an adhesive, the crosslinked polyester resin can be suitably used in the form of either a solution or an adhesive sheet, although not limited thereto. In the case of a solution, a solution obtained by dissolving the polyester resin, the epoxy resin, and the transesterification catalyst in a solvent is used. The solution is then applied to one of the materials to be bonded (hereinafter sometimes referred to as an adherend), and then the coating film is brought into a B-stage state without drying it or after partially drying it. After laminating the surface of the other material, the coating film is dried and subsequently crosslinked, and the two material surfaces are bonded. As used herein, the term "B-stage" refers to a semi-cured state that appears to be cured and is free of tackiness, and generally refers to a state where the gel fraction is from about 20% by mass to about 40% by mass. In the case of an adhesive sheet, the sheet is obtained by applying the solution onto a release substrate to form a coating film, then partially or completely drying the solvent contained in the coating film, and partially or completely carrying out crosslinking. Then, one of materials to be bonded, the sheet, and the other material are laminated at their surfaces, and the two materials surfaces are bonded to each other by applying a temperature equal to or higher than the stress relaxation initiation temperature and applying a pressure. In the case of either the solution or the sheet, since the followability to the surface of the adherend is exhibited, materials having irregular surfaces can be bonded. The type of the adherend is not particularly limited, and, for example, a resin film, a metal foil, or a metal plate may be used. Examples of the resin film include a polyimide film, a polyester film, and a PET film. Examples of the metal foil include a copper foil, a silver foil, a gold foil, and an aluminum foil. Examples of the metal plate include a copper plate, an iron plate, a SUS plate, and an aluminum plate. The crosslinked polyester resin may be used as an adhesive for bonding resin films, metal foils, metal plates, a resin film and a metal foil, and a resin film and a metal plate.

### <Formation of Assembly>

An assembly having a layer containing the crosslinked polyester resin on the surface of an adherend can be formed by partially or entirely applying a paint or a coating agent containing the crosslinked polyester resin onto one or both sides of an adherend. Also, by bonding a plurality of adherends using an adhesive containing the crosslinked polyester resin, an assembly having a layer containing the crosslinked polyester resin disposed between the adherends can also be formed. A layer consisting of the crosslinked polyester resin may be formed by using a paint, a coating agent, or an adhesive consisting of the crosslinked polyester resin. The assembly may be a laminate consisting of two or more adherend layers and one or more adhesive layer containing the crosslinked polyester resin. The adhesive layer may be a layer consisting of the crosslinked polyester resin. The plurality of the adherends may be formed from the same material, or different materials.

### <Disassembly of Assembly and Laminate>

The embodiment of the present invention includes the method for peeling the layer containing the crosslinked polyester resin from an assembly, including the step of heating the layer containing the crosslinked polyester resin at a temperature equal to or higher than a stress relaxation initiation temperature of the crosslinked polyester resin, when the assembly has the adherend and the layer containing the crosslinked polyester resin having a disulfide bond, obtained by crosslinking the polyester (A) having a carboxy group with the epoxy compound (B). In an assembly or a laminate including the layer containing the crosslinked polyester resin and the adherend, the crosslinked polyester resin and the adherend can be easily peeled off from each other at their interface when the layer containing the crosslinked polyester resin is heated to a temperature equal to or higher than the stress relaxation initiation temperature. At a temperature equal to or higher than the stress relaxation initiation temperature, the adhesion strength between the crosslinked polyester resin and the adherend is drastically decreased, and, in that state, the assembly can be readily disassembled by applying a force having a component parallel to the bonding interface and/or a force having a component perpendicular to and directed away from the bonding interface to separate the layer containing the crosslinked polyester resin from the adherend. The layer containing the crosslinked polyester resin may be a layer consisting of the crosslinked polyester resin.

The present application claims the benefit of priority to Japanese Patent Application No. 2023-033020 filed on March 3rd, 2023. The entire contents of the specification of Japanese Patent Application No. 2023-033020 are incorporated herein by reference.

### EXAMPLES

Hereinafter, the present invention will be described in more detail with reference to Examples and Comparative Examples. However, the scope of the present invention is not limited by these Examples. The measurement values described in the Examples and Comparative Examples were obtained by the methods described below. Unless otherwise specified, "part(s)" refers to "parts by mass," and "mol" refers to "part(s) by mole".

### <Number Average Molecular Weight (Mn)>

The sample was dissolved or diluted in tetrahydrofuran to a sample concentration of approximately 0.5% by mass, and the solution was filtrated using a polytetrafluoroethylene membrane filter with a pore size of 0.5 µm to obtain a sample solution. The number average molecular weight was measured by gel permeation chromatography using tetrahydrofuran as a mobile phase and a differential refractometer as a detector. The flow rate was 1 mL/min, and the column temperature was 30°C. Monodisperse polystyrene was used as the molecular weight standard. In calculating the number average molecular weight, fractions corresponding to molecular weights less than 1000 were excluded.

### <Acid Value>

In 20 mL of chloroform was dissolved a sample weighing 0.2 g, and the resulting solution was titrated with a 0.1 N potassium hydroxide (KOH) ethanol solution using phenolphthalein as an indicator. The acid value (mg KOH/g) was determined by calculating the amount of KOH (mg) consumed for neutralization from the titration volume and converting it into the amount per gram of resin.

### <Glass Transition Temperature>

In an aluminum sample pan was placed a sample weighing 5 mg, and the pan was sealed with a lid. Using a differential scanning calorimeter "model: DSC220 " manufactured by Seiko Instruments Inc., the sample was held at 250°C for 5 minutes, then rapidly cooled with liquid nitrogen, and measured from -100°C to 300°C at a heating rate of 20°C/min. The inflection point of the resulting curve was defined as the glass transition temperature.

### (Synthesis Example of Polyester (A1-1))

In a reaction vessel equipped with a stirrer, a thermometer, and a distillation condenser, 32 mol of terephthalic acid, 73 mol of isophthalic acid, 1 mol of trimellitic anhydride, 15 mol of 2-methyl-1,3-butanediol, 85 mol of 1,6-hexanediol, and 0.2 mol of tetrabutyl titanate were charged. The mixture was then gradually heated to 250°C, and an esterification reaction was carried out while removing the generated water from the system. After completion of the esterification reaction, the pressure was gradually reduced to 10 mmHg while increasing the temperature to 250°C to carry out an initial polymerization, followed by a post-polymerization at a pressure of 1 mmHg or less until a predetermined torque was reached. Subsequently, the pressure was returned to atmospheric level using nitrogen, then 1 mol of trimellitic anhydride was added, and the mixture was reacted at 220°C for 30 minutes to obtain the polyester (A1-1). The composition and characteristic values of the resulting polyester (A1-1) are shown in Table 1.

### (Synthesis Example of Polyester (A1-2))

In a reaction vessel equipped with a stirrer, a thermometer, and a distillation condenser, 53 mol of terephthalic acid, 53 mol of isophthalic acid, 55 mol of ethylene glycol, 45 mol of 2,2-dimethyl-1,3-propanediol, and 0.2 mol of tetrabutyl titanate were charged. The mixture was then gradually heated to 250°C, and an esterification reaction was carried out while removing the generated water from the system. After completion of the esterification reaction, the pressure was gradually reduced to 10 mmHg while increasing the temperature to 250°C to carry out an initial polymerization, followed by a post-polymerization at a pressure of 1 mmHg or less until a predetermined torque was reached, and the polyester (A1-2) was obtained. The composition, the number average molecular weight, and other properties of the resulting polyester (A1-2) are shown in Table 1.

### (Synthesis Example of Polyester (A2-1))

In a glass flask equipped with a stirrer, 100 mol of 3,3'-dithiopropionic acid, 100 mol of 1,5-pentanediol, and 1 mol of scandium triflate were charged, and all the raw materials were dissolved at 115°C. Once the raw materials were dissolved, the pressure inside the system was gradually reduced to 5 mmHg over 30 minutes while removing the generated water from the system, and polycondensation reaction was carried out at 115°C for 4 hours under a vacuum of 0.3 mmHg or lower. After completion of the reaction, the contents were removed from the flask and cooled. The composition, the number average molecular weight, and other properties of the resulting polyester (A2-1) are shown in Table 1. In Table 1, the amount of disulfide bonds (mol%) based on 100 mol% of the amount of ester bonds is also shown.

### (Synthesis Example of Polyester (A2-2))

In a glass flask equipped with a stirrer, 50 mol of 3,3'-dithiopropionic acid, 25 mol of 1,5-pentanediol, 25 mol of BHET (bis(hydroxyethyl)terephthalate; an ethylene glycol-modified product of terephthalic acid), and 0.5 mol of scandium triflate were charged, and all the raw materials were dissolved at 115°C. Once the raw materials were dissolved, the pressure inside the system was gradually reduced to 5 mmHg over 30 minutes while removing the generated water from the system, and a polycondensation reaction was carried out at 115°C for 4 hours under a vacuum of 0.3 mmHg or lower. After completion of the reaction, the contents were removed from the flask and cooled. The composition, the number average molecular weight, and other properties of the resulting polyester (A2-2) are shown in Table 1. In Table 1, the amount of disulfide bonds (mol%) based on 100 mol% of the amount of ester bonds is also shown.

### (Synthesis Example of Polyester (A2-3))

In a glass flask equipped with a stirrer, 100 mol of sebacic acid, 100 mol of 1,5-pentanediol, and 1 mol of scandium triflate were charged, and all the raw materials were dissolved at 115°C. Once the raw materials were dissolved, the pressure inside the system was gradually reduced to 5 mmHg over 30 minutes while removing the generated water from the system, and a polycondensation reaction was carried out at 115°C for 4 hours under a vacuum of 0.3 mmHg or lower. After completion of the reaction, the contents were removed from the flask and cooled. The composition, the number average molecular weight, and other properties of the resulting polyester (A2-3) are shown in Table 1.

### (Synthesis Example of Polyester (A3-1))

In a reaction vessel equipped with a stirrer, a thermometer, and a reflux pipe, 80 parts of the polyester (A1-1), 20 parts of the polyester (A1-2), 2.6 parts of pyromellitic dianhydride, and 100 parts of toluene were charged. The mixture was gradually heated to 80°C to dissolve the polyesters and pyromellitic dianhydride in toluene. After complete dissolution, 0.05 parts of triethylamine as a reaction catalyst was added, followed by gradual heating to 105°C, and the mixture was reacted for 24 hours. After confirming the completion of the reaction by IR (infrared spectroscopy), the reaction mixture was diluted with toluene to obtain a solution of the polyester (A3-1) having a carboxy group on a side chain, with a solid content of 40% by mass. The characteristic values of the resulting polyester (A3-1) are shown in Table 2.

### (Synthesis Example of Polyester (A3-2))

In a reaction vessel equipped with a stirrer, a thermometer, and a reflux pipe, 100 parts of the polyester (A2-1) having a disulfide bond in the main chain, 1.7 parts of pyromellitic dianhydride, and 100 parts of toluene were charged. The mixture was gradually heated to 80°C to dissolve the polyester and pyromellitic dianhydride in toluene. After complete dissolution, 0.05 parts of triethylamine as a reaction catalyst was added, followed by gradual heating to 105°C, and the mixture was reacted for 24 hours. After confirming the completion of the reaction by IR, the reaction mixture was diluted with toluene to obtain a solution of the polyester (A3-2) having a carboxy group on a side chain and a disulfide bond in the main chain, with a solid content of 40% by mass. The characteristic values of the resulting polyester (A3-2) are shown in Table 2. In Table 2, the amount of disulfide bonds (mol%) based on 100 mol% of the amount of ester bonds is also shown.

### (Synthesis Example of Polyester (A3-3))

In a reaction vessel equipped with a stirrer, a thermometer, and a reflux pipe, 48 parts of the polyester (A1-1), 52 parts of the polyester (A2-1) having a disulfide bond in the main chain, 1.6 parts of pyromellitic dianhydride, and 100 parts of toluene were charged. The mixture was gradually heated to 80°C to dissolve the polyesters and pyromellitic dianhydride in toluene. After complete dissolution, 0.05 parts of triethylamine as a reaction catalyst was added, followed by gradual heating to 105°C, and the mixture was reacted for 24 hours. After confirming the completion of the reaction by IR, the reaction mixture was diluted with toluene to obtain a solution of the polyester (A3-3) having a carboxy group on a side chain and a disulfide bond in the main chain, with a solid content of 40% by mass. The characteristic values of the resulting polyester (A3-3) are shown in Table 2. In Table 2, the amount of disulfide bonds (mol%) based on 100 mol% of the amount of ester bonds is also shown.

### (Synthesis Example of Polyester (A3-4))

In a reaction vessel equipped with a stirrer, a thermometer, and a reflux pipe, 100 parts of the polyester (A2-2) having a disulfide bond in the main chain, 0.8 parts of pyromellitic dianhydride, and 100 parts of toluene were charged. The mixture was gradually heated to 80°C to dissolve the polyester and pyromellitic dianhydride in toluene. After complete dissolution, 0.05 parts of triethylamine as a reaction catalyst was added, followed by gradual heating to 105°C, and the mixture was reacted for 24 hours. After confirming the completion of the reaction by IR, the reaction mixture was diluted with toluene to obtain a solution of the polyester (A3-4) having a carboxy group on a side chain and a disulfide bond in the main chain, with a solid content of 40% by mass. The characteristic values of the resulting polyester (A3-4) are shown in Table 2. In Table 2, the amount of disulfide bonds (mol%) based on 100 mol% of the amount of ester bonds is also shown.

**[Table 1]**

| Polyester | | | A1-1 | A1-2 | A2-1 | A2-2 | A2-3 |
|---|---|---|---|---|---|---|---|
| Composition (mol %) | Polycarboxylic acid component | Terephthalic acid | 30 | 50 | - | 33 | - |
| | | Isophthalic acid | 69 | 50 | - | - | - |
| | | Trimellitic anhydride | 1 | - | - | - | - |
| | | 3,3'-Dithiodipropionic acid | - | - | 100 | 67 | - |
| | | Sebacic acid | - | - | - | - | 100 |
| | Polyhydric alcohol component | Ethylene glycol | - | 55 | - | 67 | - |
| | | 2,2-Dimethyl-1,3-propanediol | - | 45 | - | - | - |
| | | 2-Methyl-1,3-butanediol | 15 | - | - | - | - |
| | | 1,4-Butanediol | - | - | - | - | - |
| | | 1,5-Pentanediol | - | - | 100 | 33 | 100 |
| | | 1,6-Hexanediol | 85 | - | - | - | - |
| | Additional acid | Trimellitic anhydride | 1 | - | - | - | - |
| Amount of disulfide bonds (mol %)* | | | 0 | 0 | 50 | 33 | 0 |
| Aromatic/aliphatic components ratio | | | 50/50 | 50/50 | 0/100 | 17/83 | 0/100 |
| Physical properties | Number average molecular weight (Mn) | | 15000 | 3000 | 13000 | 5000 | 15000 |
| | Acid value (mg KOH/g) | | 5.1 | 0.3 | 8.6 | 2.2 | 5.6 |
| | Glass transition temperature (°C) | | 7 | 55 | -51 | -29 | -2.6 |

| | | | | | | | |
|---|---|---|---|---|---|---|---|
| * Amoun of disulfide bonds based on 100 mol% of an amount of ester bonds (mol %) | | | | | | | |

**[Table 2]**

| Polyester | | | A3-1 | A3-2 | A3-3 | A3-4 |
|---|---|---|---|---|---|---|
| Composition (parts by mass) | Polyester | A1-1 | 80 | - | 48 | - |
| | | A1-2 | 20 | - | - | - |
| | | A2-1 | - | 100 | 52 | - |
| | | A2-2 | - | - | - | 100 |
| | Chain extender | Pyromellitic dianhydride | 2.6 | 1.7 | 1.6 | 0.8 |
| Physical properties | Amount of disulfide bonds (mol%) * | | 0 | 50 | 25 | 33 |
| | Aromatic/aliphatic components ratio | | 50/50 | 0/100 | 25/75 | 17/83 |
| | Number average molecular weight (Mn) | | 16000 | 8600 | 15200 | 6000 |
| | Acid value (mg KOH/g) | | 17 | 30 | 15 | 35 |
| | Glass transition temperature (°C) | | 15 | -50 | -49 | -51 |

| | | | | | | |
|---|---|---|---|---|---|---|
| * Amoun of disulfide bonds based on 100 mol% of an amount of ester bonds (mol %) | | | | | | |

### <Example of Preparing Crosslinked Polyester Resin Film>

A film-shaped crosslinked polyester resin (crosslinked polyester resin film) was prepared as follows.

### 1. Preparation of Sample Solution

The polyester (A) and the epoxy compound (B) were dissolved in a mixed solvent of *methyl ethyl ketone*/*toluene =* 1/1 (mass ratio) at a blend ratio shown in Tables 3 and 4 and a solid content of 10% by mass to 35% by mass, to obtain a polyester sample solution having an appropriate viscosity. In Tables 3 and 4, the blend ratio of the epoxy compound (B) based on 100 parts by mole of the carboxy groups of the polyester (A) is shown in the unit of parts by mol. Subsequently, a transesterification catalyst was separately dissolved in DMF (dimethylformamide) at a solid content of 14% by mass to obtain a transesterification catalyst solution.

### 2. Preparation of Single-Layer Film Sample 1 (Thickness: 1.0 mm)

The polyester sample solution, or a solution of the polyester sample solution and the transesterification catalyst solution mixed at a blend ratio shown in Tables 3 and 4, was poured into a Teflon (registered trademark) mold, so that the film thickness after drying would be 1.0 mm. In Tables 3 and 4, the blend ratio of the transesterification catalyst based on 100 parts by mole of the carboxy groups of the polyester (A) is shown in parts by mole. Subsequently, the solution was heated at 40°C on a heater to evaporate the solvent, followed by sequential heating at 130°C for 1 hour, 140°C for 1 hour, and 150°C for 3 hours, and the single-layer film sample 1 (thickness: 1.0 mm) consisting of the crosslinked polyester resin was obtained.

### 3. Preparation of Single-Layer Film Sample 2 (Thickness: 0.4 mm)

The polyester sample solution, or a solution of the polyester sample solution and the transesterification catalyst solution obtained by mixing them in a glass bottle at a blend ratio shown in Tables 3 and 4, was applied using an applicator with a 200 µm gap onto a Teflon (registered trademark) sheet to form a coating film. In Tables 3 and 4, the blend ratio of the transesterification catalyst based on 100 parts by mole of the carboxy groups of the polyester (A) is shown in parts by mole. After drying at 80°C for 1 minute and at 140°C for 2 minutes, followed by sequential heating at 130°C for 1 hour, 140°C for 1 hour, and 150°C for 3 hours, the single-layer film sample 2 (thickness: 0.4 mm) consisting of the crosslinked polyester resin was obtained.

In the following, the single-layer film sample 1 (thickness: 1.0 mm) was used for evaluation of the self-healing properties and the molding processability, and the single-layer film sample 2 (thickness: 0.4 mm) was used for a stress relaxation test, a tensile test, and evaluation of adhesion.

In Tables 3 and 4, the following were used as the epoxy compound (B) and the transesterification catalyst.

### (Epoxy Compound (B))

1,4-butanediol diglycidyl ether (manufactured by Tokyo Chemical Industry Co., Ltd.)
TETRAD-X (N,N,N',N'-tetraglycidyl-m-xylene diamine, manufactured by MITSUBISHI GAS CHEMICAL COMPANY, INC.)

### (Transesterification Catalyst)

Zn(OAc)₂ (zinc acetate, manufactured by FUJIFILM Wako Pure Chemical Corporation)
TBD (1,5,7-triazabicyclo[4.4.0]dec-5-ene, manufactured by Tokyo Chemical Industry Co., Ltd.)

### <Stress Relaxation Test>

The stress relaxation test was carried out at a temperature of from 30°C to 210°C with a rheometer MCR302 (manufactured by Anton Paar GmbH) in an N₂ atmosphere gas, using a disk-shaped test piece having a diameter of 8 mm and a thickness of 0.4 mm cut from the single-layer film sample 2. A vertical stress of 0.1 N was applied to the sample to avoid sample slippage. A shear strain of 10%, which falls within the linear region, was applied. In the stress relaxation test, the occurrence of the stress relaxation refers to a phenomenon in which the ratio of the stress σ normalized by the initial stress σ₀ (σ/σ₀) reaches 0.7 or less within 1×10⁴ seconds, and the **temperature** at which the stress relaxation was initiated was defined as the stress relaxation initiation temperature. **In** addition, the time required for the relaxation modulus to reach 1/e ( = 0.37) times the initial relaxation modulus, as measured at 150°C, was also measured.

### <Tensile Test>

The measurement was conducted at room temperature using a Tensilon universal material testing machine (manufactured by A&D Company, Limited). Using a film sample having a thickness of 0.4 mm, a width of 1 cm, and a length of 5 cm cut from the single-layer film sample 2, the strength and the Young's modulus were measured by the method according to ASTM D882, with a distance between chucks of 40 mm at a tensile speed of 20 mm/min. The strength was defined as the tensile load at break of the sample divided by the area of the test piece. The Young's modulus was determined from the maximum elasticity (linear equation of the tangent with the steepest slope on the SS curve) just before the film sample began to deform on the stress-strain (SS) curve.

### <Self-Healing Properties at 120°C>

A scratch (approximately 0.1 mm in depth) was made on the surface of a film sample (1.5 cm in length, 1.5 cm in width, and 1.0 mm in thickness) cut from the single-layer film sample 1, using a cutter. Subsequently, the film sample was placed in an oven that had reached 120°C and heat-treated. When the scratch disappeared within 5 minutes after the heat treatment and a crosslinked polyester resin film with no scratch on the surface was obtained, the film was evaluated to have excellent self-healing properties ⊚. When the scratch disappeared for from 5 minutes to 10 minutes after the heat treatment and a crosslinked polyester resin film with no scratch on the surface was obtained, the film was evaluated to have good self-healing properties ∘. When the scratch remained even after 10 minutes, the film was evaluated to have poor self-healing properties ×. The presence or absence of the scratch was judged by observing the scratched area under a microscope at 100× magnification. The evaluation results are shown in Tables 3 and 4.

### <Molding Processability at 120°C>

A film test piece having a width of 5 mm and a length of 5 mm was cut from the single-layer film sample 1 (thickness: 1.0 mm), and placed in a mold. The mold was prepared from a Teflon (registered trademark) sheet with a thickness of 1 mm by cutting out a circle with a diameter of 8 mm from the sheet. After placing the film test piece in the mold, pressure and heat were applied using a hot press under a pressure condition of 4 MPa and a heating condition of 120°C for 15 minutes. When the test piece was successfully molded into the shape defined by the mold, the film was evaluated to have good moldability ∘. When the test piece failed to be molded into the shape of the mold, the film test piece was evaluated to have poor moldability ×. The evaluation results are shown in Tables 3 and 4.

### <PET/PET and PI/PI Peel Strength (Adhesion)>

The adhesion was evaluated based on the results of 90° peel strength measurement. A test piece having a length of 20 mm and a width of 50 mm was cut from the single-layer film sample 2 (thickness: 0.4 mm). Subsequently, the test piece was placed on a PET film with a thickness of 25 µm (manufactured by TOYOBO Co., Ltd.). On the test piece, the same type of PET film was placed to form a three-layer structure of "PET film/crosslinked polyester resin film/PET film", and the layers were bonded to each other by pressing and heating them at 120°C and 20 MPa for 5 minutes, using a hot press. The resulting bonded assembly (laminate) was used as a sample for evaluating the 90° peel strength. Also, a sample for evaluating the 90° peel strength was prepared under the same conditions as those described above, except that a three-layer structure of "PI/crosslinked polyester resin film/PI" was formed using a polyimide film (PI, "APICAL" (registered trademark) manufactured by KANEKA CORPORATION, thickness: 12.5 µm) instead of the PET films. The 90° peel strength was measured at 25°C and a tensile speed of 50 mm/min using an Autograph AG-Xplus manufactured by Shimadzu Corporation. The measurement results of the 90° peel strength are shown in Tables 3 and 4. In the tables, "-" refers to the case where the film and the single-layer film sample 2 were not bonded, and the 90° peel strength could not be measured.

**[Table 3]**

| Examples · Comparative Examples | | | | Example 1 | Example 2 | Example 3 | Example 4 | Example 5 | Example 6 | Example 7 | Example 8 |
|---|---|---|---|---|---|---|---|---|---|---|---|
| Composition | Polyester (A) | Type | | A2-1 | A2-1 | A2-1 | A2-1 | A2-2 | A2-2 | A3-2 | A3-2 |
| | | Amount of disulfide bonds (mol%) *1 | | 50 | 50 | 50 | 50 | 33 | 33 | 50 | 50 |
| | | Aromatic/aliphatic components ratio | | 0/100 | 0/100 | 0/100 | 0/100 | 17/83 | 17/83 | 0/100 | 0/100 |
| | Epoxy compound (B) (parts by mole)* 2 | 1,4-Butanediol diglycidyl ether | | 50 | - | - | - | 50 | - | 50 | - |
| | | TETRAD-X | | - | 25 | 25 | 25 | - | 25 | - | 25 |
| | Transesterification catalyst (parts by mole)* 2 | Zn(OAc)₂ | | - | - | 20 | - | - | - | - | - |
| | | TBD | | 20 | - | - | 20 | 20 | 20 | 20 | 20 |
| Physical properties | Stress relaxation initiation temperature | | °C | 30 | 100 | 60 | 30 | 140 | 140 | 80 | 100 |
| | Time for relaxation modulus to reach 1/e of initial value at 150°C | | sec | 19 | 469 | 55 | 9 | 2250 | 1500 | 13 | 250 |
| | Tensile test (strength) | | MPa | 2.2 | 2.7 | 2.4 | 2.5 | 3.5 | 3.3 | 7.1 | 12.5 |
| | Tensile test (Young's modulus) | | GPa | 0.001 | 0.003 | 0.001 | 0.002 | 0.003 | 0.003 | 0.005 | 0.010 |
| Performance evaluation | Self-healing properties at 120°C | | - | ⊚ | ⊚ | ⊚ | ⊚ | ○ | ○ | ⊚ | ⊚ |
| | Molding processability at 120°C | | - | ○ | ○ | ○ | ○ | ○ | ○ | ○ | ○ |
| | PET/PET 90° peel strength | | N/mm | 0.22 | 0.42 | 0.31 | 1.43 | 0.50 | 1.51 | 0.28 | 0.62 |
| | PI/PI 90° peel strength | | N/mm | 0.50 | 0.57 | 0.32 | 0.51 | 0.41 | 0.60 | 0.24 | 0.64 |

| | | | | | | | | | | | |
|---|---|---|---|---|---|---|---|---|---|---|---|
| *1 Amoun of disulfide bonds based on 100 mol% of an amount of ester bonds (mol %) *2 Amount based on 100 parts by mole of carboxyl groups of the polyester | | | | | | | | | | | |

**[Table 4]**

| Examples · Comparative Examples | | | | Example 9 | Example 10 | Example 11 | Example 12 | Example 13 | Comparative Example 1 | Comparative Example 2 | Comparative Example 3 | Comparative Example 4 |
|---|---|---|---|---|---|---|---|---|---|---|---|---|
| Composition | Polyester (A) | Type | | A3-3 | A3-3 | A3-3 | A3-4 | A3-4 | A3-1 | A3-1 | A2-3 | A2-3 |
| | | Amount of disulfide bonds (mol%) *1 | | 25 | 25 | 25 | 33 | 33 | 0 | 0 | 0 | 0 |
| | | Aromatic/aliphatic components ratio | | 25/75 | 25/75 | 25/75 | 17/83 | 17/83 | 50/50 | 50/50 | 0/100 | 0/100 |
| | Epoxy compound (B) (parts by mole)* 2 | 1,4-Butanediol diglycidyl ether | | - | - | - | 50 | - | - | 50 | 50 | - |
| | | TETRAD-X | | 20 | 25 | 25 | - | 25 | 25 | - | - | 25 |
| | Transesterification catalyst (parts by mole)* 2 | Zn(OAc)₂ | | - | - | 20 | - | - | - | - | - | - |
| | | TBD | | - | - | - | 20 | 20 | 20 | 20 | 20 | 20 |
| Physical properties | Stress relaxation initiation temperature | | °C | 125 | 140 | 130 | 130 | 100 | 150 | 180 | >200 | > 200 |
| | Time for relaxation modulus to reach 1/e of initial value at 150°C | | sec | 230 | 1968 | 327 | 250 | 23 | 6010 | >10000 | >10000 | > 10000 |
| | Tensile test (strength) | | MPa | 7.3 | 15.9 | 10.6 | 8.1 | 11.5 | 10.7 | 6.3 | - | 8.3 |
| | Tensile test (Young's modulus) | | GPa | 0.003 | 0.010 | 0.010 | 0.005 | 0.010 | 0.040 | 0.010 | - | 0.233 |
| Performance evaluation | Self-healing properties at 120°C | | - | ○ | ○ | ○ | ○ | ⊚ | × | × | × | × |
| | Molding processability at 120°C | | - | ○ | ○ | ○ | ○ | ○ | × | × | × | × |
| | PET/PET 90° peel strength | | N/mm | 0.15 | 0.10 | 0.12 | 0.84 | 0.41 | - | - | - | - |
| | PI/PI 90° peel strength | | N/mm | 0.19 | 0.12 | 0.15 | 0.99 | 0.83 | - | - | - | - |

| | | | | | | | | | | | | |
|---|---|---|---|---|---|---|---|---|---|---|---|---|
| *1 Amoun of disulfide bonds based on 100 mol% of an amount of ester bonds (mol %) *2 Amount based on 100 parts by mole of carboxyl groups of the polyester | | | | | | | | | | | | |

As shown in Tables 3 and 4, in Examples 1 to 13, the crosslinked polyester resin formed into the single-layer film samples 1 exhibited high self-healing properties and good molding processability, and the crosslinked polyester resin formed into the single-layer film samples 2 used as adhesive sheets exhibited high adhesion to the substrates (PET films and PI films). Furthermore, when the polyesters (A) having a carboxy group on a side chain were used, the coating films exhibited improved strength and Young's modulus at room temperature. In contrast, in Comparative Examples 1 and 2, a polyester resin having no disulfide bond in the main chain was used. As a result, each of the crosslinked polyester resins of Comparative Examples 1 and 2 had a high stress relaxation initiation temperature, and self-healing properties at 120°C and molding processability at 120°C were not exhibited. In Comparative Examples 3 and 4, a polyester resin having no disulfide bond in the main chain, obtained by copolymerizing sebacic acid instead of 3,3'-dithiodipropionic acid, was used. In Comparative Example 3, since 1,4-butanediol diglycidyl ether, which is a bifunctional epoxy compound, was used, the sample of the crosslinked product was hard and brittle, and was not strong enough for the tensile test. In Comparative Example 4, since the crosslinked structure was formed using TETRAD-X, which is a trifunctional epoxy compound, the obtained sample was hard and strong, but self-healing properties and molding processability at 120°C and adhesion through softening were not exhibited.

### INDUSTRIAL APPLICABILITY

The crosslinked polyester resin of the present invention exhibits stress relaxation at a temperature equal to or lower than 140°C, and, accordingly, exhibits self-healing properties, molding processability, and adhesion to substrates such as a PET film and a PI film, at a relatively low temperature of 120°C. Since the crosslinked polyester resin also exhibits softening behavior at a temperature in the range of from 30°C to 140°C, the crosslinked polyester resin has followability to substrates at a relatively low temperature, thereby enabling bonding without defects such as cracking, caused by the difference in thermal expansion between substrates. Hence, the crosslinked polyester resin of the present invention can be used for adhesives and adhesive sheets. Furthermore, a layer containing the crosslinked polyester resin and a layer consisting of the crosslinked polyester resin can be peeled off from an assembly or a laminate by heating at a temperature equal to or higher than the stress relaxation initiation temperature. Furthermore, since the crosslinked polyester resin exhibits self-healing properties, the crosslinked polyester resin can be suitably used for paints and coating agents.

## Claims

1. A crosslinked polyester resin having a disulfide bond, obtained by crosslinking a polyester (A) having a carboxy group with an epoxy compound (B).

2. The crosslinked polyester resin according to claim 1,
wherein a time required for a relaxation modulus to reach 0.37 times an initial relaxation modulus is from 5 × 10⁻¹ seconds to 5 × 10³ seconds, as measured at 150°C using a rheometer under application of a vertical stress of 0.1 N and a shear strain of 10%.

3. The crosslinked polyester resin according to claim 1,
wherein the polyester (A) has an acid value of 7 mg KOH/g or more and 120 mg KOH/g or less.

4. The crosslinked polyester resin according to claim 1,
wherein the crosslinked polyester resin has disulfide bonds in an amount of from 10 mol% to 60 mol% based on 100 mol% of an amount of ester bonds.

5. The crosslinked polyester resin according to claim 1,
wherein the crosslinked polyester resin contains a transesterification catalyst in an amount of from 5 parts by mole to 40 parts by mole based on 100 mol equivalents of the carboxy groups in the polyester (A).

6. The crosslinked polyester resin according to claim 1,
wherein the epoxy compound (B) is an epoxy amine compound having a tertiary amino group.

7. A paint containing the crosslinked polyester resin according to any one of claims 1 to 6.

8. A coating agent containing the crosslinked polyester resin according to any one of claims 1 to 6.

9. An adhesive containing the crosslinked polyester resin according to any one of claims 1 to 6.

10. An assembly comprising a layer containing the crosslinked polyester resin according to any one of claims 1 to 6 and an adherend.

11. A method for peeling the layer containing the crosslinked polyester resin from the assembly according to claim 10, comprising the step of heating the layer containing the crosslinked polyester resin at a temperature equal to or higher than a stress relaxation initiation temperature of the crosslinked polyester resin.
